Europäisches Patentamt

European Patent Office

Office européen des brevets

(19)

(11) Veröffentlichungsnummer: **0 170 140**
**B1**

(12)

# EUROPÄISCHE PATENTSCHRIFT

(45) Veröffentlichungstag der Patentschrift:
08.06.88

(21) Anmeldenummer: 85108779.1

(22) Anmeldetag: 13.07.85

(51) Int. Cl.⁴: **A 01 C 5/06,** A 01 B 15/16, A 01 B 23/06

(54) Abkratzvorrichtung für Scheibenschare einer Sämaschine.

(30) Priorität: 19.07.84 US 632481

(43) Veröffentlichungstag der Anmeldung:
05.02.86 Patentblatt 86/6

(45) Bekanntmachung des Hinweises auf die Patenterteilung:
08.06.88 Patentblatt 88/23

(84) Benannte Vertragsstaaten:
DE FR GB

(56) Entgegenhaltungen:
US-A-2 187 443
US-A-2 701 996
US-A-4 206 817

(73) Patentinhaber: DEERE & COMPANY, 1 John Deere Road, Moline Illinois 61265 (US)

(72) Erfinder: Swales, Barton Lee, 1708 East 4th Street, Coal Valley Illinois 61240 (US)

(74) Vertreter: Feldmann, Bernhard, DEERE & COMPANY European Office, Patent Department Steubenstrasse 36- 42 Postfach 503, D-6800 Mannheim 1 (DE)

EP 0 170 140 B1

## Beschreibung

Die Erfindung bezieht sich auf eine Abkratzvorrichtung für Scheibenschare eines Bodenbearbeitungsgerätes oder einer Sämaschine mit zwei gegenüberliegenden, an einer Halterung verstellbar angeordneten Tragarmen, an deren unteren Enden jeweils ein Abstreifrad drehbar gelagert ist, das über eine zwischen den Tragarmen wirkende Feder gegen die Oberfläche des Scheibenschares gedrückt wird, so daß das Scheibenschar und das Abstreifrad mit ihren Seitenflächen aneinanderliegen.

Es ist bereits eine Abkratzvorrichtung für die Scheibenschare einer Sämaschine gemäß dem Oberbegriff des Anspruches 1 bekannt (US-A-4 206 817), die aus zwei V-förmig zueinander angeordneten Speichenrädern besteht, die mittels lösbarer Lager an zwei mit Abstand zueinander angeordneten Tragarmen angeschlossen sind. Ein jeder Tragarm ist an seinem einen Ende an eine Tragvorrichtung schwenkbar angeschlossen. Im Bereich der Anschlußstelle der Tragarme befindet sich eine Druckfeder, die zwischen den beiden Tragarmen wirkt und diese nach außen drückt, so daß die Abstreifräder gegen die Innenseite der Scheibenschare zur Anlage kommen. Durch die Anordnung der Druckfeder zwischen den Tragarmen liegen die Abstreifräder ständig gegen die Oberfläche der Scheibenschare an. Bei einem Verschleiß der Abstreifräder müssen sie insgesamt ausgewechselt werden. Hierdurch erhält man eine relativ teure Vorrichtung.

Demgegenüber liegt der Erfindung die Aufgabe zugrunde, die Abstreifräder derart auszubilden und anzuordnen, daß bei einem Verschleiß des Anlageteiles gegen die Oberfläche der Scheibenschare nicht das gesamte Abstreifrad ausgewechselt werden muß. Diese Aufgabe ist dadurch gelöst worden, daß das Abstreifrad aus einem Radkranz mit einem zwischen Radkranz und Scheibenschar angeordneten Abstreifring bzw. Gußrad besteht, der mit dem Radkranz lösbar verbindbar ist. Durch die Vorteilhafte Ausbildung und Anordnung des Abstreifrades mit dem lösbar angeordneten Abstreifring läßt sich bei einem Verschleiß des Abstreifringes dieser in kürzester Zeit gegen einen neuen Abstreifring auswechseln, so daß dadurch die Abkratzvorrichtung insgesamt kostengünstiger arbeiten kann. Zur leichteren Montage des Abstreifringes am Abstreifrad ist es vorteilhaft, daß das Abstreifrad eine Nabe mit zahlreichen sich radial erstreckenden Speichen zur Aufnahme des Radkranzes aufweist, an dem ein Abstreifring lösbar angeschlossen ist, der mit einem zwischen die Speichen einsteckbaren Zapfen ausgerüstet ist. Somit erhält man auf einfache Weise eine Drehverbindung zwischen dem Abstreifring und dem zugehörigen Abstreifrad. Eine einfache Montage wird auch dadurch ermöglicht, daß der Abstreifring bzw. Gußrad mit Arretierungsnoppen ausgerüstet ist, die mit dem Abstreifrad form- und/oder kraftschlüssig verbindbar sind.

In weiterer Ausgestaltung der Erfindung ist es vorteilhaft, daß die beiden Tragarme einenends über einen Schraubenbolzen an zwei mit Abstand zueinander angeordnete Tragplatten lösbar angeschlossen sind und die Tragarme über eine endseitig an die Tragarme angeschlossene Zugfeder derart zusammengezogen werden, daß die an dem Abstreifrad angeordneten Abstreifringe gegen die Außenseiten der beiden Scheibenschare gedrückt werden. Durch die Verwendung eines Schraubenbolzens oberhalb der Zugfeder können die Tragarme gemeinsam mit den Scheibenscharen auseinandergeschwenkt werden, indem der Schraubenbolzen weiter angezogen wird, so daß dadurch die Zugfeder auseinandergezogen wird. Hierdurch lassen sich die Abstreifräder auf einfache Weise von der Oberfläche der Scheibenschare abheben. Vorteilhaft ist es außerdem, daß das Abstreifrad ein lösbares Lager aufweist, das aus einem Flansch mit beidseitig sich axial erstreckenden, stirnseitig je einen Wulst aufweisenden Lagerzapfen gebildet ist, wobei der eine Lagerzapfen in die Nabe und der andere Lagerzapfen in eine in dem Tragarm vorgesehene Bohrung einrastbar und selbsttätig sicherbar ist, und daß die beiden Wulste elastisch ausgebildet sein können und je einen Außendurchmesser aufweisen, der größer ist als der Innendurchmesser der Nabe bzw. der Bohrung des Tragarmes.

Da die einzelnen Lagerzapfen endseitig mit Wulsten ausgerüstet sind, die beispielsweise federelastisch ausgebildet sein können, lassen sich die Lagerzapfen in die entsprechenden Bohrungen des Abstreifrades bzw. des Tragarmes einschieben und dann durch den Wulst sichern, der hierzu gegen die eine Oberfläche der Nabe des Abstreifrades bzw. des Tragarmes zur Anlage kommt.

Eine einfache und effektvolle Reinigung des Scheibenschares erhält man dadurch, daß der Abstreifring als Gußrad ausgebildet ist, das beispielsweise aus einem eine hohe Gleitfähigkeit aufweisenden Material, insbesondere aus Kunststoff, beispielsweise aus Nylon, gebildet ist. Da beispielsweise das Abstreifrad aus Nylon hergestellt sein kann, wird eine hohe Lebensdauer des Abstreifrades gewährleistet, da der Abrieb zwischen der Metalloberfläche des Scheibenschares und des aus Kunststoff hergestellten Abstreifringes gering ist. Ferner wird bei vollständigem Verschleiß des Abstreifringes und bei Anlage eines Metallteiles bzw. des Tragarmes gegen die Oberfläche des Scheibenschares der Bedienungsperson durch entsprechend höhere Abriebgeräusche ein Signal übermittelt, das der Bedienungsperson Aufschluß darüber gibt, daß der Abstreifring ausgewechselt werden muß.

In weiterer Ausgestaltung der Erfindung ist es vorteilhaft, daß die Zugfeder in an den Tragarmen vorgesehene Ösen einhängbar ist, daß ein jeder Tragarm an seiner Innenseite zwischen dem Schraubenbolzen und der Zugfeder einen Bolzen trägt, der in eine in der Tragplatte vorgesehene Bohrung einrastbar ist und den Tragarm gegen Drehen an dem Schraubenbolzen sichert, und daß jeweils zwischen den Bolzen und der Zugfeder eine Noppe derart, angeordnet ist, daß bei Verstellung des Schraubenbolzens der Tragarm um diese Noppe schwenken kann. Durch die Verwendung eines Bolzens im Bereich des Schraubenbolzens wird auf einfache Weise eine Drehsicherung des Tragarmes an der Tragplatte vorgenommen. Ferner ist es möglich, durch die Verwendung einer im Bereich des Bolzens vorgesehenen Noppe die Tragarme um diese Noppe so weit zu verschwenken, bis ein ausreichender Abstand zwischen der Oberfläche der Scheibenschare und der Abstreifräder hergestellt ist. Eine derartige Verstellung der Abstreifräder wird dann durchgeführt, wenn die Bodenverhältnisse nicht zu einer übermäßigen Verschmutzung der Scheibenschare führen. Hierdurch kann das Abstreifelement geschont werden, so daß die Standzeit des Abstreifelementes sich erhöht.

Im folgenden wird die Erfindung anhand von lediglich einen Ausführungsweg darstellenden Zeichnungen näher erläutert. Es zeigt:

Fig. 1 eine perspektivische Darstellung zweier V-förmig zueinander angeordneter Scheiben einer Sämaschine mit einer Abkratzvorrichtung,

Fig. 2 die Abkratzvorrichtung gemäß Fig. 1 in auseinandergezogener Darstellung,

Fig. 3 eine Schnittdarstellung des Rades der Abstreifvorrichtung,

Fig. 4 einen Schnitt entlang der Linie 4 - 4 gemäß Fig. 1.

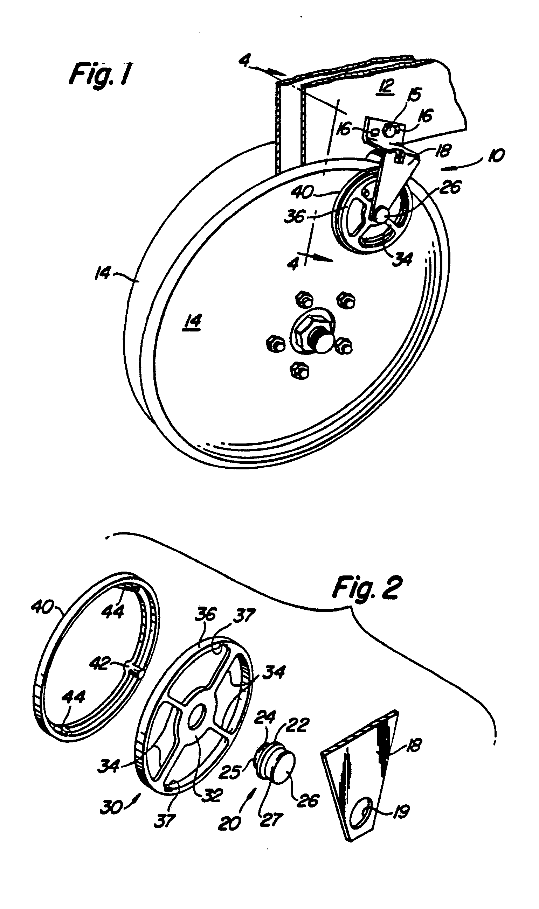

In der Zeichnung ist in Fig. 1 mit 10 eine Abstreif- bzw. eine Abkratzvorrichtung bezeichnet, die auf einer Tragplatte 12 eines in der Zeichnung nicht dargestellten Rahmens einer Sämaschine angeordnet ist. Die Abstreifvorrichtung 10 wird mittels einer Feder 13 gegen die konvexe Seite der Scheibe 14 der Sämaschine gedrückt. Es ist jedoch auch möglich, die Abkratzvorrichtung gegen die konkave Seite der Scheibe 14 anzudrücken.

Die Abkratzvorrichtung 10 ist an einem Tragarm 18 angeordnet, der an seinem oberen Ende über einen Schraubenbolzen 15 mit einer zugehörigen Mutter an der Tragplatte 12 befestigt ist. An der Innenseite des Tragarmes 18 im Bereich des Schraubenbolzens 15 befindet sich ein nach innen stehender Bolzen 16, der in eine entsprechende Bohrung der Tragplatte 12 hineinragt, so daß der Tragarm 18 gegen Drehen an der Tragplatte 12 gesichert ist.

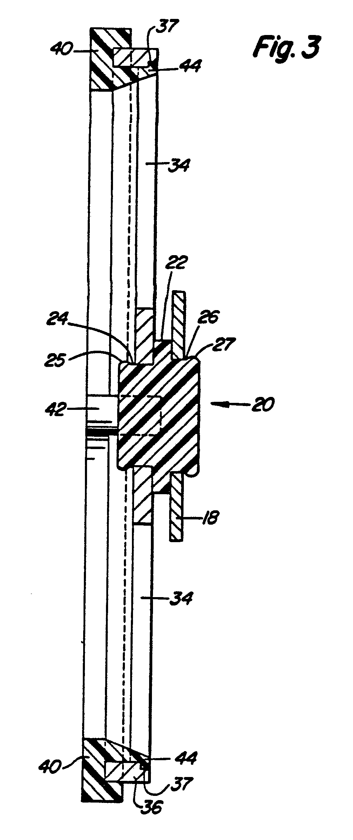

Wie aus den Figuren 2 und 3 hervorgeht, ist ein Gußlager 20 in dem Tragarm 18 aufgenommen, in dem ein Abstreifrad 30 drehbar gelagert ist. Das Gußlager 20 weist einen Flansch 22 und einen ersten und zweiten Lagerzapfen 24 und 26 auf, die sich beiderseits vom Flansch 22 axial nach außen erstrecken. Jeweils an der Stirnseite des Lagerzapfens 24 und 26 ist ein im Durchmesser größerer Wulst 25 bzw. 27 vorgesehen.

Das Abstreifrad 30 besteht aus einer Nabe 32, an der zahlreiche sich radial erstreckende Speichen 34 vorgesehen sind, die an ihren äußeren Enden einen Radkranz 36 tragen. An der Innenseite des Radkranzes 36 befindet sich ein Gußrad 40, das mit einer sich radial erstreckenden Nut versehen ist, in der der Radkranz 36 aufgenommen ist. Das Gußrad 40 weist an seiner Innenseite einen sich radial erstreckenden Zapfen 42 auf, der sich zwischen die Speichen 34 erstreckt. Weiterhin sind an dem Radkranz 36 zwei Arretierungsnoppen 44 vorgesehen, die mit der Innenseite des Radkranzes 36 bzw. mit einer in dem Radkranz 36 vorgesehenen Nut 37 kraftschlüssig bzw. auch formschlüssig verbunden sind. Die Lage des Zapfens 42 ist so gewählt, daß das Gußrad 40 sich dreht, wenn auch das Abstreifrad 30 gedreht wird.

Bei dem Zusammenbau der Abstreif- bzw. Abkratzvorrichtung 10 wird das Gußlager 20 in die Nabe 32 und in eine in dem Tragarm 18 vorgesehene Bohrung 19 eingesetzt, wobei die beiden federelastisch ausgebildeten Wulste 25 und 27 das Abstreifrad 30 auf dem Lagerzapfen 24 und dem Lagerzapfen 26 in der Bohrung 19 sichern (siehe Fig. 3). Das Gußrad 40 wird in den Radkranz 36 eingesetzt und schnappt dort ein und wird dann mittels der Arretierungsnoppen 44 gesichert, die hierzu in der Nut 37 aufgenommen sind. Die beiden Wulste 25 und 27 sowie die Arretierungsnoppen 44 ermöglichen einen einfachen und schnellen Zusammenbau der einzelnen Teile und sichern gleichzeitig den Radkranz 36 im Abstreifrad 30, wobei die Federkräfte der Feder 13 die Scheiben 14 gegenseitig zur Anlage bringen.

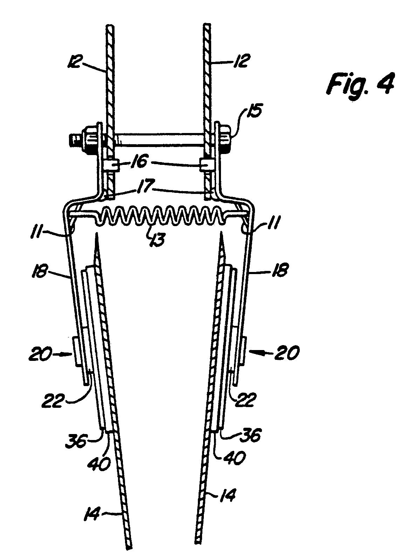

Ist die Abkratzvorrichtung 10 zusammengebaut, so kann sie auf der Tragplatte 12 montiert werden, wobei das Gußrad 40 dann plan gegen die außenliegende Oberfläche der Scheibe 14 anliegt. Wie aus Fig. 4 hervorgeht, ist hierzu die Feder 13 mit den gegenüberliegenden Tragarmen 18 verbunden, an der je eine Scheibe 14 angeordnet ist, die an ihrem unteren äußeren Umfang gegeneinander anliegen. Die Scheiben 14 werden bei der Sämaschine als Furchenöffner eingesetzt. Ein jeder Tragarm 18 weist unterhalb des Bolzens 16 einen sich nach innen erstreckenden Vorsprung bzw. eine Noppe 17 auf, die gegen die Oberfläche der Tragplatte 12 anliegt. Die beiden gegenüberliegenden Enden der Feder 13 sind in eine entsprechende an dem jeweiligen Tragarm 18 vorgesehene Öse 11 eingehängt. Die Feder 13 zieht, wie bereits erwähnt, die Oberfläche des Gußrades 40 gegen die ebene bzw. konvex ausgebildete Oberfläche der Scheibe 14. Sind die Bodenverhältnisse so, daß die Abkratzvorrichtung nicht eingesetzt zu werden braucht, so wird der Schraubenbolzen 15 etwas angezogen, so daß der Tragarm 18 um die Noppe schwenkt und somit die Federkräfte der Feder 13 überwindet, so daß das Gußrad 40 nicht mehr gegen die Oberfläche der Scheibe 14 anliegt. Wird die Abkratzvorrichtung 10 wieder benutzt, so wird lediglich der Schraubenbolzen 15 ein wenig gelöst, um somit die Federkräfte der Feder 13 zu verringern und somit das Gußrad 40 wieder gegen die Oberfläche der Scheibe zu drücken. Die Bewegung des Gußrades 40 ist begrenzt, da das Gußrad stets zwischen dem Radkranz 36 und der Scheibe 14 angeordnet ist, wobei der Zwischenraum zwischen diesen beiden Teilen stets so groß ist, daß das Gußrad nicht entfernt werden bzw. abspringen kann. Die Federbeaufschlagung des Gußrades 40 kann auch erfolgen, wenn lediglich eine Scheibe 14 eingesetzt wird. In diesem Falle wird das eine Ende der Feder 13 an eine Befestigungsöse der Tragplatte 12 angeschlossen, oder es wird anstelle der als Zugfeder ausgebildeten Feder 13 eine Druckfeder verwendet, die oberhalb der Noppe 17 vorgesehen werden kann, um somit das Gußrad 40 gegen die Oberfläche der Scheibe 14 zu pressen.

Verschleißt beispielsweise das Gußrad 40 der Abstreifvorrichtung 10, so braucht lediglich der Schraubenbolzen 15 entfernt zu werden, um ein neues Gußrad gegen das verschlissene Gußrad 40 auszutauschen. Anschließend wird der Schraubenbolzen wieder eingesetzt und angezogen. Das mit 40 bezeichnete Gußrad kann beispielsweise aus gegossenem Nylon hergestellt werden oder auch aus einem anderen geeigneten Material. Dabei ist es vorteilhaft, ein derartiges Material für das Gußrad 40 zu wählen, das einen geringen Reibungswiderstand, und somit eine hohe Lebensdauer gewährleistet. Wird das Rad 40 der Abstreifvorrichtung 10 aus einem Material hergestellt, das einen sehr geringen Reibungswiderstand aufweist, so wird das drehbar gelagerte Rad im Arbeitseinsatz so lange nicht wahrgenommen, bis ein entsprechender Verschleiß aufgetreten ist und dann ein entsprechendes Kratzgeräusch durch die Bedienungsperson wahrgenommen wird, das dann als Anzeichen dafür angesehen werden kann, daß das Gußrad 40 ausgewechselt werden muß. Das übermäßig laute Kratzgeräusch kann beispielsweise auch dadurch auftreten, daß der Radkranz 36 bei entsprechendem Verschleiß des Gußrades 40 gegen die Scheibe 14 zur Anlage kommt.

**Patentansprüche**

1. Abkratzvorrichtung für Scheibenschare (14) eines Bodenbearbeitungsgerätes oder einer Sämaschine mit zwei gegenüberliegenden, an einer Halterung verstellbar angeordneten Tragarmen (18), an deren unteren Enden jeweils ein Abstreifrad (30) drehbar gelagert ist, das über eine zwischen den Tragarmen (18) wirkende Feder (13) gegen die Oberfläche des Scheibenschares (14) gedrückt wird so daß das Scheibenschar (14) und das Abstreifrad mit ihren Seitenflächen aneinanderliegen, dadurch gekennzeichnet, daß das Abstreifrad (30) aus einem Radkranz (36) mit einem zwischen Radkranz (36) und Scheibenschar (14) angeordneten Abstreifring bzw. Gußrad (40) besteht, der mit dem Radkranz (36) lösbar verbindbar ist.

2. Vorrichtung nach Anspruch 1, dadurch gekennzeichnet, daß das Abstreifrad eine Nabe (32) mit zahlreichen sich radial erstreckenden Speichen (34) zur Aufnahme des Radkranzes (36) aufweist, an dem ein Abstreifring lösbar angeschlossen ist, der mit einem zwischen die Speichen (34) einsteckbaren Zapfen (42) ausgerüstet ist.

3. Vorrichtung nach Anspruch 1 oder 2, dadurch gekennzeichnet, daß der Abstreifring bzw. Gußrad (40) mit Arretierungsnoppen (44) ausgerüstet ist, die mit dem Abstreifrad form- und/oder kraftschlüssig verbindbar sind.

4. Vorrichtung nach einem oder mehreren der vorherigen Ansprüche, dadurch gekennzeichnet, daß die beiden Tragarme (18) einenends über einen Schraubenbolzen (15) an zwei mit Abstand zueinander angeordnete Tragplatten (12) lösbar angeschlossen sind und die Tragarme über eine endseitig an die Tragarme (18) angeschlossene Zugfeder (13) derart zusammengezogen werden, daß die an dem Abstreifrad angeordneten Abstreifringe gegen die Außenseiten der beiden Scheibenschare gedrückt werden.

5. Vorrichtung nach einem oder mehreren der vorherigen Ansprüche, dadurch gekennzeichnet, daß das Abstreifrad ein lösbares Lager (20) aufweist, das aus einem Flansch (22) mit beidseitig sich axial erstreckenden, stirnseitig je einen Wulst (25, 27) aufweisenden Lagerzapfen (24, 26) gebildet ist, wobei der eine Lagerzapfen in die Nabe und der andere Lagerzapfen (26) in eine in dem Tragarm (18) vorgesehene Bohrung (19) einrastbar und selbsttätig sicherbar ist.

6. Vorrichtung nach einem oder mehreren der vorherigen Ansprüche, dadurch gekennzeichnet, daß die beiden Wulste (25, 27) elastisch ausgebildet sein können und je einen Außendurchmesser aufweisen, der größer ist als der Innendurchmesser der Nabe (32) bzw. der Bohrung (19) des Tragarmes (18).

7. Vorrichtung nach einem oder mehreren der vorherigen Ansprüche, dadurch gekennzeichnet, daß der Abstreifring als Gußrad (40) ausgebildet ist, das beispielsweise aus einem eine hohe Gleitfähigkeit aufweisenden Material, insbesondere aus Kunststoff, beispielsweise aus Nylon, gebildet ist.

8. Vorrichtung nach einem oder mehreren der vorherigen Ansprüche, dadurch gekennzeichnet, daß die Zugfeder (13) in an den Tragarmen (18) vorgesehene Ösen (11) einhängbar ist.

9. Vorrichtung nach einem oder mehreren der vorherigen Ansprüche, dadurch gekennzeichnet, daß ein jeder Tragarm (18) an seiner Innenseite zwischen dem Schraubenbolzen (15) und der Zugfeder (13) einen Bolzen (16) trägt, der in eine in der Tragplatte (12) vorgesehene Bohrung einrastbar ist und den Tragarm (18) gegen Drehen an dem Schraubenbolzen (15) sichert.

10. Vorrichtung nach einem oder mehreren der vorherigen Ansprüche, dadurch gekennzeichnet, daß jeweils zwischen den Bolzen (16) und der Zugfeder (13) eine Noppe (17) derart angeordnet ist, daß bei Verstellung des Schraubenbolzens (15) der Tragarm um diese Noppe schwenken kann.

## Claims

1. Scraper device for disc coulters (14) of a ground-working implement or seed drill with two carrier arms (18) situated opposite each other and adjustably fitted on a fixture, with a scraper wheel (30), which is rotably mounted at each of their lower ends, being pressed against the surface of the disc coulter (14) by means of a spring (13) acting between the carrier arms (18), so that the disc coulter (14) and the scraper wheel lie with their side surfaces on each other characterised by the fact that the scraper wheel (30) consists of a wheel ring (36) with a scraper ring or cast wheel (40) fitted between the wheel ring (36) and disc coulter (14), which is releasably connected with the wheel ring (36).

2. Device as per claim 1, characterised by the fact that the scraper wheel has a hub (32) with numerous radially extending spokes (34) for receiving the wheel ring (36), on which a scraper ring is releasably connected, which is fitted with a pin (42) which can be inserted between the spokes (34).

3. Device as per claim 1 or 2, characterised by the fact that the scraper ring or cast wheel (40) is fitted with setting knobs (44), which can be connected with the scraper wheel with form and/or force locking.

4. Device as per one or more of the previous claims, characterised by the fact that the two carrier arms (18) are releasably connected at one end by means of a screw bolt (15) to two carrier plates (12) fitted at a distance to each other and the carrier arms are pulled together in such a way by means of a tension spring (13) connected at the end to the carrier arms (18) that the scraper rings fitted on the scraper wheel are pressed against the outsides of the two disc coulters.

5. Device as per one or more of the previous claims, characterised by the fact that the scraper wheel has a releasable bearing (20), which is formed from a flange (22) with bearing pins (24, 26) extending axially on both sides and each having a bead (25, 27) on its front side, with one bearing pin which can engage in the hub and the other bearing pin (26) in a hole (19) provided in the carrier arm (18) and being automatically securable.

6. Device as per one or more of the previous claims, characterised by the fact that the two beads (25, 27) can be formed elastically and each have an external diameter which is greater than the internal diameter of the hub (32) or hole (19) of the carrier arm (18).

7. Device as per one or more of the previous claims, characterised by the fact that the scraper ring is in the form of a cast wheel (40), which is made for example of a material showing a high slide capability, in particular of plastic, for example nylon.

8. Device as per one or more of the previous claims, characterised by the fact that the tension spring (13) can be mounted in eyes (11) provided on the carrier arms (18).

9. Device as per one or more of the previous claims, characterised by the fact that each of the carrier arms (18) carries on its inside between the screw bolt (15) and the tension spring (13) a bolt (16), which can engage in a hole provided in the carrier plate (12) and secures the carrier arm (18) against rotating on the screw bolt (15).

10. Device as per one or more of the previous claims, characterised by the fact that in each case a knob (17) is fitted in such a way between the bolts (16) and the tension spring (13) that with adjustment of the screw bolt (15) the carrier arm can pivot around this knob.

## Revendications

1. Grattoir pour disque (14) d'un outil de travail du sol ou d'un semoir, comportant deux bras de support (18) opposés, placés sur une console de façon à pouvoir être déplacés, à l'extrémité inférieure respectives de chacun desquels est placée de façon à pouvoir tourner une roue de raclage (30) qui est appuyée contre la surface du disque (14) au moyen d'un ressort (13) agissant entre les bras de support (18), de sorte que le disque (14) et la roue de raclage sont en contact par leurs surfaces latérales, caractérisé en ce que la roue de raclage (30) comprend une jante (36) avec un anneau de raclage ou une roue coulée (40) placé(e) entre la jante (36) et le disque (14), pouvant être relié (e) de façon amovible à la jante (36).

2. Dispositif selon la revendication 1, caractérisé en ce que la roue de raclage comporte un moyeu (32) pourvu de nombreux rais radiaux (34) pour recevoir la jante (36) à laquelle un anneau de raclage peut être raccordé de façon amovible, lequel anneau comporte une broche (42) pouvant être insérée entre les rais (34).

3. Dispositif selon la revendication 1 ou 2, caractérisé en ce que l'anneau de raclage ou la roue coulée (40) comporte des saillies de verrouillage (44) qui peuvent être reliées à la roue de raclage par concordance de forme et/ou en forçant.

4. Dispositif selon une ou plusieurs des revendications précédentes, caractérisé en ce que les deux bras de support (18) sont, à une extrémité, raccordés de façon amovible, par un boulon (15), à deux plaques de support (12) mutuellement écartées, et en ce que les bras de support sont resserrés au moyen d'un ressort de traction (13) raccordé aux extrémités aux bras de support (18) de telle façon que les anneaux de raclage placés sur la roue de raclage sont appuyés contre les faces extérieures des deux disques.

5. Dispositif selon une ou plusieurs des revendications précédentes, caractérisé en ce que la roue de raclage comporte un palier amovible (20) qui est constitué par une bride (22) avec deux tourillons (24, 26) s'étendant axialement des deux côtés, comportant chacun frontalement un renflement (25, 27), l'un des tourillons pouvant être encliqueté et fixé automatiquement dans le moyeu et l'autre tourillon (26) dans un alésage (19) prévu dans le bras de support (18).

6. Dispositif selon une ou plusieurs des revendications précédentes, caractérisé en ce que les deux renflements (25, 27) peuvent être élastique et présenter chacun un diamètre extérieur supérieur au diamètre intérieur du moyeu (32) ou de l'alésage (19) du bras de support (18).

7. Dispositif selon une ou plusieurs des revendications précédentes, caractérisé en ce que l'anneau de raclage est réalisé sous la forme d'une roue coulée (40) qui par exemple est constituée par une matière présentant une capacité de glissement élevée, en particulier une matière plastique, par exemple du nylon.

8. Dispositif selon une ou plusieurs des revendications précédentes, caractérisé en ce que le ressort de traction (13) peut être accroché dans des oeillets (11) prévus sur les bras de support (18).

9. Dispositif selon une ou plusieurs des revendications précédentes, caractérisé en ce que chaque bras de support (18) comporte sur sa face intérieure, entre le boulon (15) et le ressort de traction (13), une cheville (16) qui peut s'engager dans un alésage prévu dans la plaque de support (12) et empêche le bras de support (18) de tourner sur le boulon (15).

10. Dispositif selon une ou plusieurs des revendications précédentes, caractérisé en ce qu'il est prévu, dans chaque cas, entre la cheville (16) et le ressort de traction (13), une saillie (17) disposée de façon que, lors du déplacement du boulon (15), le bras de support puisse pivoter autour de cette saillie.

Fig. 1

Fig. 2

Fig. 3

Fig. 4